# EUROPÄISCHE PATENTSCHRIFT

(11) **EP 2 739 965 B1**
(45) Veröffentlichungstag und Bekanntmachung des Hinweises auf die Patenterteilung: **16.09.2015**
(21) Anmeldenummer: 12741008.2
(22) Anmeldetag: 01.08.2012
(51) Int. Cl.: G01N 27/327

(54) **ELEKTROCHEMISCHER SENSOR**
ELECTROCHEMICAL SENSOR
CAPTEUR ÉLECTROCHIMIQUE

(30) Priorität: 04.08.2011 DE 102011109402
(43) Veröffentlichungstag der Anmeldung: 11.06.2014
(73) Patentinhaber: GENSORIC GMBH, 18057 Rostock (DE)
(72) Erfinder: FLECHSIG, Gerd-Uwe, 17166 Teterow (DE); WALTER, Anne, 18182 Bentwisch (DE); JACOBSEN, Martin, 24116 Kiel (DE)
(74) Vertreter: Moré, Solveig Helga
(86) Internationale Anmeldenummer: PCT/EP2012/065066
(87) Internationale Veröffentlichungsnummer: WO 2013/017635

(56) Entgegenhaltungen:
- WO-A1-01/83674
- WO-A2-2007/020093
- FLECHSIG ET AL.: LANGMUIR, Bd. 21, 2005, Seiten 7848-7843, XP002686673, in der Anmeldung erwähnt
- GRUNDLER P ET AL: "Deposition and stripping at heated microelectrodes. Arsenic(V) at a gold electrode", ELECTROCHIMICA ACTA, ELSEVIER SCIENCE PUBLISHERS, BARKING, GB, Bd. 43, Nr. 23, 30. Juli 1998 (1998-07-30) , Seiten 3451-3458, XP004133563, ISSN: 0013-4686, DOI: 10.1016/S0013-4686(98)00091-7

## Beschreibung

Die vorliegende Erfindung betrifft einen elektrochemischen Sensor mit einem Basiselement aus elektrisch isolierendem Material mit einer planaren Oberfläche, und einem Paar von Leitern, die auf dieser planaren Oberfläche des Basiselements aufgebracht sind, wobei die beiden Leiter des Paares durch mindestens eine drahtförmige elektrochemische Arbeitselektrode verbunden sind. Ferner betrifft die vorliegende Erfindung ein Sensor-Array, das mehrere zuvor beschriebene Sensoren aufweist, und ein Verfahren zur Beschichtung einer Arbeitselektrode eines zuvor beschriebenen Sensors.

Sensoren dieser Art können zur Analyse unterschiedlicher Flüssigkeiten verwendet werden. Durch eine elektrochemische Reaktion bestimmter Inhaltsstoffe der Flüssigkeit an der Oberfläche der Arbeitselektrode bzw. deren Beschichtung ändert sich der durch die Oberfläche der Arbeitselektrode fließende Elektrolysestrom, welcher im Rahmen der Voltammetrie oder Amperometrie gemessen werden kann, wodurch Rückschlüsse auf die erfolgte Reaktion und somit auf einen bestimmten Inhaltsstoff der Flüssigkeit erlaubt sind. Solche Inhaltsstoffe können beispielsweise DNA, RNA, aber auch Quecksilber, Arsen, Cadmium oder Phenolderivate oder viele andere elektrochemisch aktive Stoffe sein.

WO 2007/020093 lehrt Grundlagen des elektrochemischen Nachweises der DNA-Hybridisierung an einer Goldelektroden-Oberfläche z.B. mit Hilfe von Osmiumverbindungen. DE 10 2005 007 148 A1 beschreibt ein Analyseverfahren für Nukleinsäuren, welches die klassische Polymerasekettenreaktion (PCR) dahingehend modifiziert, dass die verschiedenen Schritte an unterschiedlichen beheizten Reaktionsflächen durchgeführt werden, wodurch eine gleichzeitige Analyse und Vervielfältigung möglich wird. Vorrichtungen zur DNA-Hybridisierung an direkt geheizten Elektroden werden in Flechsig et al., 2005, Langmuir 21, 7848-7843 beschrieben. Insbesondere zeigt Fig. 1 dieser Veröffentlichung einen Sensor nach dem Stand der Technik, bei dem eine Arbeitselektrode mit Hilfe eines Plastikstegs mit wenigen Mikrolitern einer Nukleinsäure-Lösung beschichtet werden kann, um anschließend eine Hybridisierung von komplementären Nukleinsäuren zu ermöglichen. Typischerweise stehen insbesondere bei der Nukleinsäureanalytik keine großen Mengen der Beschichtungslösung zur Verfügung, so dass ein freies Eintauchen der Elektrode in eine solche Lösung ausscheidet.

Die in Flechsig et al, 2005, gelehrte Lösung hat jedoch den Nachteil, dass ein Plastiksteg in die Vorrichtung eingebracht werden muss, um den Tropfen der Beschichtungslösung darauf abzusetzen, so dass dieser die ganze Oberfläche der drahtförmigen Elektrode benetzt. Dem Fachmann stellte sich dem gegenüber die Aufgabe, bei Erhaltung der Vorteile des Sensors eine konstruktiv einfachere Lösung zu finden, die dennoch eine gleichmäßige Beschichtung der Elektrode auch mit einem geringen Volumen einer Beschichtungslösung ermöglicht.

Dieses Problem wird durch die vorliegende Erfindung gelöst, insbesondere durch den Gegenstand der Ansprüche. Die Erfindung stellt insbesondere einen elektrochemischen Sensor (1) zur Verfügung, enthaltend:
- ein Basiselement (3) aus elektrisch isolierendem Material mit einer planaren Oberfläche (9), und
- ein Paar von Leitern (5), die auf dieser planaren Oberfläche (9) des Basiselements (3) aufgebracht sind, wobei die beiden Leiter (5) des Paares durch mindestens eine bevorzugt drahtförmige Arbeitselektrode (7) verbunden sind,
wobei in dieser planaren Oberfläche (9) des Basiselements (3) unter der Arbeitselektrode (7) eine Vertiefung (11) ausgebildet ist, wobei der Boden (13) der Vertiefung (11) von der Arbeitselektrode (7) beabstandet ist.

Bevorzugt ist die Vertiefung so ausgestaltet, dass bei Einbringung eines Flüssigkeitstropfens in die Vertiefung die Arbeitselektrode von der Flüssigkeit benetzt werden kann, wobei bevorzugt die gesamte Oberfläche der Arbeitselektrode benetzt werden kann. Eine gleichmäßige Benetzung ist vorteilhaft für die Analyse, denn es kann die gesamte Oberfläche der Elektrode beschichtet werden.

Dabei, wird ausgenutzt, dass der Flüssigkeitstropfen aufgrund der Oberflächenspannung der Flüssigkeit bogenförmig aus der Vertiefung hinaus, d.h. über die Ebene, in der die Oberfläche des Basiselements liegt, hinweg ragt. Auf diese Weise kann z.B. eine drahtförmige Arbeitselektrode, die sich etwa auf der Höhe der Oberfläche des Basiselements erstreckt, vollständig von der Flüssigkeit umgeben werden. Die Vertiefung kann zusätzlich dazu dienen, den Flüssigkeitstropfen an einem festen Ort auf dem Basiselement zu fixieren.

Ein Flüssigkeitstropfen, der in die Vertiefung eingebracht wird und der die Arbeitselektrode vollständig umgibt, kann dazu verwendet werden, um die Arbeitselektrode z.B. mit Sonden oder Mikrostrukturen zu beschichten. Dieser Beschichtungsvorgang findet im Allgemeinen vor der eigentlichen Analyse einer Flüssigkeit statt. Dabei binden die Beschichtungsstoffe als Inhaltsstoffe der Beschichtungsflüssigkeit des Flüssigkeitstropfens an der Oberfläche der Arbeitselektrode an und bilden eine ggf. strukturierte Schicht z.B. von Sondenmolekülen. Nachdem der Flüssigkeitstropfen von der Arbeitselektrode wieder entfernt wurde, kann die Analyse einer Analyseflüssigkeit, welche die Zielmoleküle umfasst, erfolgen. Verfahren zur Beschichtung und Analyse sind z.B. aus WO 2007/020093 oder DE 10 2005 007 148 bekannt.

Bevorzugt ist es, wenn der Flüssigkeitstropfen ein Volumen von 5 bis 50 µL, vorzugsweise von 10 bis 30 µL oder 15 bis 20 µL aufweist. Diese Tropfengröße ermöglicht einen äußerst effektiven Beschichtungsvorgang. Es wird eine möglichst geringe Menge an Beschichtungsflüssigkeit benötigt, wobei dennoch ausreichend Beschichtungsstoffe, wie z.B. Sondenmoleküle oder Mikrostrukturen auf die Arbeitselektrode aufgebracht werden können. Es ist bevorzugt, wenn die Vertiefung so ausgestaltet ist, dass der Flüssigkeitstropfen die Oberfläche der Arbeitselektrode über deren gesamte Länge umgibt.

In einer Ausführungsform der Erfindung umfasst der Sensor einen Flüssigkeitstropfen, welcher Kontakt zu der Arbeitselektrode und zu dem Boden der Vertiefung aufweist. Dieser Flüssigkeitstropfen umfasst bevorzugt Nukleinsäuren, z.B. eine DNA-Sonde, welche zumindest teilweise einzelsträngig sein kann. Alternative Sondenmöleküle für einen immunchemischen Sensor können Antikörper sein.

Der erfindungsgemäße Aufbau des Sensors hat ferner den Vorteil, dass im Verlauf späterer Messungen die Flüssigkeit zwischen der Arbeitselektrode und dem Boden der Vertiefung strömen und somit frei um den vollen Umfang der drahtförmige Arbeitselektrode zirkulieren kann, so dass deren gesamte Oberfläche als Reaktionsfläche zur Verfügung steht.

Unter der Oberfläche der Arbeitselektrode wird im Zusammenhang mit der vorliegenden Erfindung die Mantelfläche der Arbeitselektrode von dem Kontaktpunkt der Arbeitselektrode mit einem der Leiter eines Paares bis zu dem gegenüberliegenden Kontaktpunkt der Arbeitselektrode mit dem anderen Leiter eines Paares von Leitern verstanden. Die Kontaktpunkte der Arbeitselektrode mit den Leitern sind so ausgeführt, dass eine elektrisch leitfähige Verbindung zwischen der Arbeitselektrode und den Leitern besteht. Erfindungsgemäß kommt z.B. eine Löt-, Klebeoder Klemmverbindung in Betracht.

Die Leiter sind bevorzugt bis einschließlich zu den Kontaktstellen gegenüber der Umgebung isoliert, so dass auf dem Basiselement nur die Arbeitselektrode zur Umgebung frei ist, wobei deren Oberfläche somit mit einer Flüssigkeit direkt in Kontakt kommen kann.

Die Arbeitselektrode erstreckt sich bevorzugt im Wesentlichen geradlinig und in einer Ebene parallel zur Oberfläche des Basiselements, bevorzugt im Wesentlichen in einer Ebene mit der Oberfläche des Basiselements. Die Vertiefung in dem Basiselement befindet sich im Wesentlichen unter der Arbeitselektrode, so dass diese von dem Basiselement beabstandet ist. Die Vertiefung kann eine runde oder auch eine längliche Ausdehnung aufweisen, welche im Wesentlichen parallel zu der Arbeitselektrode verlaufen kann. Dabei liegt die Projektion der Arbeitselektrode auf das Basiselement vorzugsweise auf der Mittellinie der Vertiefung.

Die Arbeitselektrode ist in einer bevorzugten Ausführungsform beheizbar, insbesondere direkt beheizbar. Um elektrochemische Messungen bei erhöhten Temperaturen durchführen zu können, kann durch Wasser bzw. den Elektrolyten als Wärmeüberträger die Elektrode beheizt werden. Dabei wird die gesamte Elektrolytmenge mit aufgeheizt. Das ist nachteilig, da erstens eine große Elektrolytmenge nötig ist, zweitens Temperaturwechsel sehr langsam erfolgen und drittens empfindliche Stoffe in der Elektrolytlösung in Mitleidenschaft gezogen werden können. Es können auch beheizte Elektroden zum Einsatz kommen, die z.B. mit Wechselstrom direkt oder mittels Wechsel- oder Gleichstrom indirekt zu heizen sind.

Bei einer indirekten Heizung kann die Arbeitselektrode aus mehreren galvanisch voneinander getrennten konzentrischen Schichten aufgebaut sein, wobei die äußerste Schicht als Elektrode und eine innere Schicht als Heizdraht dient. Eine indirekte Heizung mittels galvanisch von der Elektrode getrennten Heizern ist nachteilig, weil der Aufbau der Sensoren komplizierter ist, die Temperaturwechsel wegen der thermischen Trägheit meistens langsamer erfolgen und die Möglichkeiten der Miniaturisierung eingeschränkt sind. Unterschiedliche direkt beheizbare Arbeitselektroden, bei denen der Heizstrom sowie der Strom für das elektrochemische Messsignal gemeinsam denselben Leiter durchfließen, sind aus dem Stand der Technik bekannt.

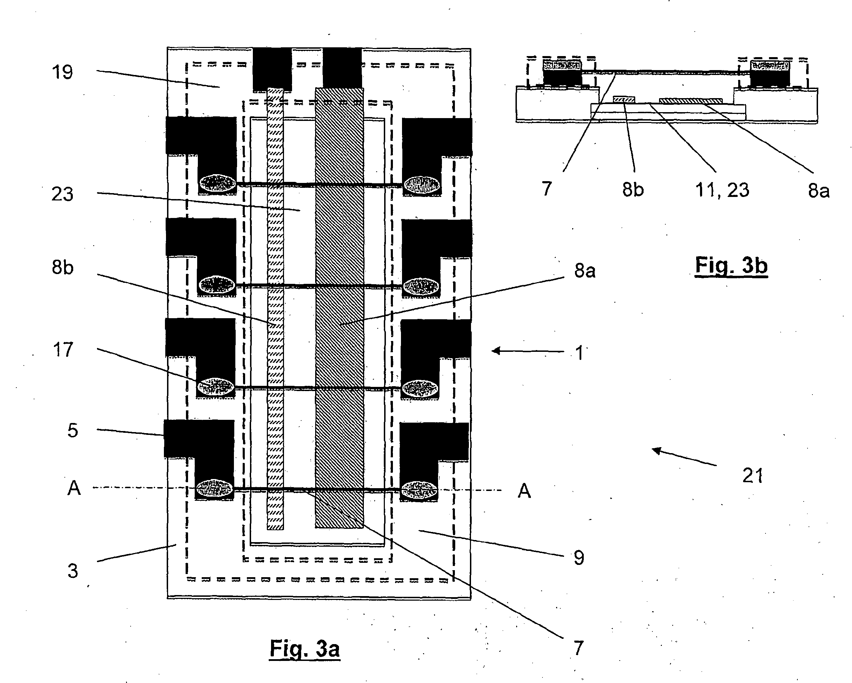

Eine direkte elektrische Heizung der Arbeitselektrode und gleichzeitig störungsfreie elektrochemische Messung kann nach dem Stand der Technik durch eine sogenannte symmetrische Anordnung oder spezielle Filterschaltungen ermöglicht werden. Eine Variante der direkt beheizten Arbeitselektrode besitzt genau in der Mitte zwischen den beiden Kontakten für die Zuleitung des Heizstroms einen dritten Kontakt für die Verbindung mit dem elektrochemischen Messgerät. Durch diese Anordnung werden störende Einflüsse des Heizstromes auf die Messsignale unterbunden. Nachteilig ist hier vor allem der komplexe Aufbau mit drei Kontakten je Arbeitselektrode, die thermische Störung durch den Wärme ableitenden dritten Kontakt und die erschwerte Miniaturisierung. In einer erfindungsgemäß bevorzugten Variante erfolgt daher eine symmetrische Kontaktierung durch eine Brückenschaltung, welche eine direkte Beheizung ermöglicht (Wachholz et al., 2007, Electroanalysis 19, 535-540, insbesondere Fig. 3; Dissertation Wachholz 2009).

Dabei ist der Sensor bevorzugt so ausgestaltet, dass die Temperaturverteilung an der Oberfläche der Arbeitselektrode gleichmäßig ist. DE 10 2004 017 750 lehrt z.B. ein Array mit mindestens einer auf einen Träger aufgebrachten Arbeitselektrode, die auf eine eigene Temperatur gebracht werden kann, wobei es möglich ist, die Temperaturverteilung der Elektrodenoberfläche gleichmäßig zu halten. Dies hat wesentliche Vorteile bei der Analytik z.B. von DNA-Sequenzen. Die in dieser Publikation genutzten Methoden können auch im Rahmen der vorliegenden Erfindung genutzt werden. Insbesondere ist es bevorzugt, dass die Leiter und die Kontaktstellen zwischen Leitern und Arbeitelektrode elektrisch gegenüber der Umgebung isoliert sind.

In einer bevorzugten Ausführungsform sind die Leiter und die Kontaktpunkte des Leiters mit der Arbeitselektrode auf den nicht auf dem Basiselement aufgebrachten Seiten durch eine elektrisch isolierende Schicht abgedeckt. Bevorzugt ist diese Schicht mindestens in einem Temperaturbereich von 0°C bis 97°C, insbesondere von 20°C bis 93°C stabil. Die Schicht kann insbesondere eine Laminierfolie sein. Laminierfolien sind üblicherweise in dem genannten Temperaturbereich stabil.

Auf diese Weise kann auf dem Basiselement nur die Arbeitselektrode mit der Flüssigkeit in elektrischen Kontakt kommen. Das Basiselement kann also, z.B. bei der Analyse einer Flüssigkeit, vollständig von der Flüssigkeit bedeckt sein, ohne dass es zu ungewolltem elektrischen Kontakt der Flüssigkeit z.B. mit dem Leiter kommt. Nur die Arbeitselektrode selbst tritt mit der Flüssigkeit in Kontakt, so dass auch nur die Reaktionen an der Oberfläche der Arbeitselektrode elektrochemisch gemessen werden.

Statt Laminierfolie können auch Heißsiegelkleber, Epoxidharz, Polyesterharz, Siliconkleber, Lötstopplack, Spannlack, Paraffin, Kautschuk, PVC, Duroplast, PU-Harz, PTFE, PE, PS, Polycarbonat, Glas, Oxide, Nitride oder andere organische oder anorganische Polymere, lackartige, kristalline oder amorphe Materialien als isolierende Schicht eingesetzt werden. Wichtig ist, dass das Material der isolierenden Schicht zwischen 0°C und 97°C temperaturstabil ist, insbesondere zwischen 20°C und 95°C oder zwischen 25°C und 93°C, da die Temperatur der Flüssigkeit sich während der Analyse bevorzugt in diesem Bereich bewegt. Stabil bedeut, dass Form und Isolationseigenschaften im Wesentlichen konstant sind. Eine geringfügige Ausdehnung oder ähnliches ist möglich, sollte aber bei einem Temperaturwechsel reversibel sein.

Ein überraschender Vorteil der erfindungsgemäßen Anordnung der Arbeitselektrode über einer Vertiefung in dem Basiselement ohne direkten Kontakt zu diesem entlang der Vertiefung betrifft den Fall, dass die Arbeitselektrode beheizt wird. Die Erfinder haben erkannt, dass sowohl ein Energieverlust an das Basiselement als auch eine hohe thermische Trägheit der Arbeitselektrode ansonsten zu einem ungleichmäßigen Temperaturfeld der Arbeitselektrode und unpräzisen Messergebnissen bei der Analyse der Flüssigkeit führen. Die Vertiefung verhindert, dass Wärme an das Basiselement abgegeben wird und somit zum einen der Arbeitselektrode verloren geht und zum anderen eine verlangsamte Aufheizung und Abkühlung zur Folge hat.

Beheizt wird die Arbeitselektrode zum einen, um je nach Inhaltsstoff der Flüssigkeit, welcher nachgewiesen werden soll, eine optimale Reaktionstemperatur zu erzeugen, wobei der Analysevorgang effektiver und/oder selektiver wird. Soll z.B. eine Hybridisierung von Nukleinsäuren stattfinden, so gibt es - wie im Stand der Technik bekannt - eine optimale Temperatur für eine spezifische Anlagerung komplementärer Nukleinsäuren. Eine Denaturierung in Einzelstränge, welche z.B. eine Abtrennung der Analyten und damit eine Regenerierung der Sensoren ermöglicht, findet typischerweise bei hohen Temperaturen, z.B. bei 93°-97°C statt. Ferner führt eine Beheizung der Arbeitselektrode zu thermischen Konvektionsströmungen in der die Arbeitselektrode umgebenden Flüssigkeit, welche ebenfalls den Analysevorgang effektiver macht.

Das Basiselement ist in einer bevorzugten Ausführungsform eine Leiterplatte und die Leiter sind als Leiterbahnen ausgestaltet, wobei die Leiter und die Kontaktpunkte des Leiters mit der Arbeitselektrode auf den nicht auf dem Basiselement aufgebrachten Seiten durch eine isolierende Laminierfolie abgedeckt sind. Die Leiterplatte kann aus Silizium gefertigt sein und z.B. eine Dicke von 1-2 mm aufweisen. Die Leiterbahnen sind dabei vorzugsweise in die Leiterplatte eindotiert oder aufgedampft. Die Leiterbahnen können Kupfer enthalten oder daraus bestehen. Als Befestigungsmethode für die Arbeitselektrode kommt etwa Bonden, Löten, Kleben oder Schweißen in Frage. Die Arbeitselektrode kann z.B. durch aufgedampfte Goldplättchen mit den Leiterbahnen in Kontakt gebracht und an diesen befestigt werden.

Die Arbeitselektrode ist im Rahmen der Erfindung bevorzugt eine drahtförmige Elektrode. Diese weist bevorzugt einen kreisförmigen Querschnitt auf. Jedoch sind auch andere Querschnittsformen, wie z.B. dreieckige, viereckige, sechseckige Querschnittsformen oder auch verschiedene Helixquerschnitte denkbar. Der Querschnitt kann über die Länge der Elektrode konstant sein. Ebenso sind Querschnittsänderungen über die Länge der Arbeitselektrode in Bezug auf Durchmesser oder Querschnittsform denkbar. Auch drahtförmige Elektroden in .Form einzelner Fasern können im Sinne der vorliegenden Erfindung zum Einsatz kommen, genauso wie andere aus dem Stand der Technik bekannten Querschnitte. Ein bevorzugter Querschnitt ist rund, bevorzugt bei einem Durchmesser von ca. 10-50 µm, bevorzugt ca. 20-30 µm oder insbesondere 25 µm. Der Widerstand der Arbeitselektrode liegt bei mindestens 0,5 Ohm, bevorzugt ca. 1 Ohm, jedoch kleiner als 20 Ohm, vorzugsweise kleiner als 10 Ohm.

Die Arbeitselektrode kann z.B. aus Gold, Silber, Kupfer, Platin, Iridium, Palladium, Bismut, Antimon und/oder Kohlenstoff, insbesondere aus Gold, Platin und/oder Silber bestehen. Bevorzugt ist die Arbeitselektrode ein Golddraht. Zum Beispiel kann ein thermisch robuster Platindraht mit einem relativ hohen Widerstand mit einer dünnen Goldschicht versehen sein, um Thiolverlinkte SAMs (self assembling monolayers) abzuscheiden. Die Arbeitselektrode kann mit einem Quecksilber- oder Amalgamfilm oder mit einem festen Metallfilm, z.B. aus Bismut, Silber, Gold oder einer Legierung daraus, beschichtet sein. Eine Beschichtung mit Bismut oder Quecksilber (insbesondere einem Amalgamfilm) kann verwendet werden, um die Wasserstoffüberspannung herabzusetzen.

Es können auch Mikro- und/oder Nanostrukturen auf der Oberfläche der Arbeitselektrode vorhanden sein, um die aktive Elektrodenoberfläche zu erhöhen und/oder den Zutritt des Analyten zu verbessern. Bevorzugt werden dazu galvanische Silber- oder Goldstrukturen, Kohlenstoff-Nanoröhrchen, Fullerene oder Graphene eingesetzt. Verfahren zur Beschichtung mit Nanostrukturen sind z.B. in Wachholz et al., 2009, Electroanalysis 21, 2153) beschrieben.

Eine der genannten Beschichtungen kann mit einer Modifikation der Oberfläche z.B. mit Nukleinsäuren wie DNA-Sonden kombiniert werden, dies ist aber je nach Anwendungsgebiet nicht notwendig. Eine Modifikation mit Nukleinsäuren kann, wie.im Stand der Technik beschrieben, kovalent oder nicht-kovalent sein. Insbesondere können über Thiolgruppen verlinkte DNA-Sonden auf die Oberfläche der Arbeitselektrode(n), z.B. aus Gold, aufgebracht sein.

Die Arbeitselektrode weist in einer bevorzugten Ausführungsform eine Länge von etwa 3 bis etwa 7 mm, vorzugsweise von etwa 5 mm, und einen Durchmesser von 10 bis 50 µm, bevorzugt 20 bis 30 µm oder von etwa 25 µm auf. Diese Ausmaße der Arbeitselektrode erlauben einerseits bei der Beschichtung der Arbeitselektrode mit Hilfe eines Flüssigkeitstropfens mit einem Volumen von 5 bis 50 µl, vorzugsweise von 10 bis 30 µL, oder von 15 bis 20 µL eine ideale Verteilung der Beschichtungsflüssigkeit um die Oberfläche der Arbeitselektrode und somit einen effektiven Beschichtungsvorgang. Andererseits bietet eine Arbeitselektrode dieser Abmessungen eine ausreichende Anzahl und Genauigkeit von Messergebnissen bei gleichzeitig möglichst geringer Baugröße, was eine Array-Anordnung des Sensors begünstigt.

In einer Ausführungsform ist der Boden der Vertiefung planar und parallel zu der planaren Oberfläche des Basiselements ausgestaltet. Der Rand der Vertiefung kann z.B. quadratisch, rechteckig, rund oder ellipsoid sein. Die Form der Vertiefung kann eine gleichmäßige, mittige Position des Flüssigkeitstropfens gewährleisten. In einer anderen Ausführungsform ist der Boden der Vertiefung abgerundet, z.B. in einer Form, die einen gleichmäßigen Abstand des Bodens zu der Arbeitselektrode gewährleistet. Es ist somit auch eine runde, z.B. sphärische oder zylinderabschnittsförmige Gestalt der Vertiefung denkbar.

Bei der Herstellung des Sensors kann die Vertiefung z.B. unter der Arbeitselektrode ausgefräst werden, was eine einfache und automatisierbare Herstellung ermöglicht.

In einer bevorzugten Ausführungsform beträgt der Abstand der Arbeitselektrode von dem Boden der Vertiefung an mindestens einem Punkt, z.B. bei einem planaren Boden, oder an allen Punkten, eine Tiefe von 0,2 mm bis 0,8 mm, vorzugsweise von 0,5 mm, wobei sich die Vertiefung vorzugsweise über die ganze Länge der Arbeitselektrode erstreckt. Ein solcher Abstand der Arbeitselektrode von dem Boden der Vertiefung lässt bei minimaler Baugröße eine ausreichende Umströmung der Arbeitselektrode zu. Ideal ist der Abstand auch für die Beschichtung einer Arbeitselektrode mit einer Länge von 3 bis 7 mm, vorzugsweise von 5 mm, und einem Durchmesser von 20 bis 30 µm, vorzugsweise von 25 µm mit einem Flüssigkeitstropfen von 5 bis 30 µL, vorzugsweise von 10 bis 20 µL, da der Flüssigkeitstropfen die Arbeitselektrode in optimaler Gestalt umgibt.

Der Sensor oder das Sensorarray kann ferner mindestens eine gemeinsame Gegenelektrode und/oder mindestens eine gemeinsame Pseudoreferenzelektrode zum sequenziellen elektrochemischen Auslesen umfassen. Alternativ kann zum parallelen (simultanen) elektrochemischen Auslesen für jede Arbeitselektrode ihre jeweils eigene Referenz- und Gegenelektrode vorgesehen werden. Als Gegenelektrode wird vorzugsweise eine beliebig gestaltete ungeheizte Kohle-, Gold- oder Platinelektrode vorgesehen. Als Pseudoreferenzelektrode wird eine ungeheizte Silber-, Goldoder Platinelektrode bevorzugt. Referenz- und/oder Gegenelektrode können auf dem gleichen Basiselement angeordnet sein oder separat.

Die bevorzugte Position der Pseudoreferenzelektrode befindet sich auf dem Boden der Vertiefung, (jeweils) unterhalb der geheizten Arbeitselektrode(n), weil dieser Bereich von der thermischen Konvektion am wenigsten beeinflusst wird und am ehesten eine konstante Temperatur behält, welche für ein konstantes Potential der Referenzelektrode wichtig ist. Auch die Gegenelektrode kann auf dem Boden der Vertiefung angeordnet sein.

Um den Effekt der thermischen Konvektionsströmung zu fördern, umfasst der Sensor vorzugsweise eine Kühlvorrichtung, welche gegenüber der Arbeitselektrode abseits des Basiselements angeordnet ist und welche die von der beheizten Arbeitselektrode erwärmte Flüssigkeit während des Analysevorgangs wieder abkühlt und somit eine Zirkulationsströmung der Flüssigkeit hervorruft, die wiederum eine Reaktion der Zielmoleküle mit den Sondenmolekülen unterstützt. Die Kühlvorrichtung umfasst vorzugsweise einen passiven Kühlkörper oder einen aktiven Peltierkühler, der die Flüssigkeit gegenüber des Basiselements bedeckt und auf diese Weise zwischen Basiselement und Kühler einschließt. Die Unterseite des Kühlers kann dabei mit Gold oder Platin oder einem anderen elektrochemisch inerten Material beschichtet sein und dient vorzugsweise als gemeinsame Gegenelektrode.

Ein wesentlicher Vorteil des erfindungsgemäßen Sensors gegenüber der in Flechsig et al., 2005, gelehrten Lösung ist es, dass sich die Sensoranordnung leicht und mit geringem Raumbedarf zu einem Array aus einer Vielzahl von ggf. selektiv heizbaren drahtförmigen Arbeitselektroden erweitern lässt.

Noch ein weiterer Vorteil besteht darin, dass zur Unterbringung der Referenz- und Gegenelektrode der elektrochemischen Messzelle eine relativ geringe Elektrolytmenge erforderlich ist. Außerdem lassen sich Arbeits-, Gegen- und Referenzelektrode gemeinsam und platzsparend auf solch einem Array unterbringen.

Ein weiterer Aspekt der vorliegenden Erfindung betrifft daher ein Sensoren-Array, welches zwei oder mehr erfindungsgemäße Sensoren aufweist, wobei die Sensoren bevorzugt auf einem gemeinsamen Basiselement angeordnet sind. Durch die möglichst geringe Baugröße der Sensoren können eine Vielzahl von Sensoren eng hintereinander und/oder nebeneinander auf einem gemeinsamen Basiselement angeordnet werden. Die Leiterbahnen sind bevorzugt parallel und/oder symmetrisch eng nebeneinander liegend angeordnet und sind gemeinsam unter einer isolierenden Schicht versiegelt. Bei Analyse einer Flüssigkeit wird die gesamte Oberfläche des Basiselements mit allen darauf angebrachten Arbeitselektroden von der Flüssigkeit umgeben.

In einer Ausführungsform sind die Vertiefungen unter mindestens 2 Arbeitselektroden des Sensoren-Arrays miteinander zu einem gemeinsamen Graben verbunden. Alternativ oder zusätzlich können die Vertiefungen unter mindestens 2 Arbeitselektroden voneinander getrennt sein.

Ein gemeinsamer Graben ist insbesondere dann nützlich, wenn die Arbeitselektroden über diesem Graben mit der gleichen Beschichtung, z.B. mit der gleichen Nukleinsäuresonde, versehen werden sollen. Dann kann ein Flüssigkeitstropfen, der entsprechend den Ausmaßen des Grabens und der Anzahl der Arbeitselektroden über diesem dimensioniert sein sollte, zur Beschichtung verwendet werden. Bei einer späteren Analyse können so z.B. parallele Kontrollmessungen durchgeführt werden, oder es können bei der gleichen Beschichtung bzw. Sonde unterschiedliche Temperaturen, auf die die Arbeitselektroden geheizt werden, verwendet werden, und/oder unterschiedliche Materialien der Arbeitselektroden verwendet werden.

Auch wenn Arbeitselektroden eines Sensoren-Arrays über separaten Vertiefungen angeordnet sind, können sie selbstverständlich mit der gleichen Beschichtung, z.B. mit der gleichen Nukleinsäure-Sequenz, versehen werden. Alternativ können unterschiedliche Beschichtungen gewählt werden, z.B. unterschiedliche Nukleinsäure-Sequenzen. Bevorzugt sind die Arbeitselektroden eines Sensoren-Arrays parallel zueinander angeordnet, insbesondere Arbeitselektroden über einem gemeinsamen Graben. Es sind jedoch auch andere Ausrichtungen denkbar.

In einer Ausführungsform weisen die Arbeitselektroden des Sensoren-Arrays jeweils dasselbe oder mehr als ein unterschiedliches Material auf, wobei das Material ausgewählt ist aus der Gruppe umfassend Gold, Silber, Quecksilber, Kupfer, Platin, Iridium, Palladium, Bismut, Antimon, Kohlenstoff oder Kombinationen davon. Der Einsatz unterschiedlicher Materialien für verschiedene Arbeitselektroden kann es z.B. erlauben, mehrere Inhaltsstoffe gleichzeitig in einer Flüssigkeit nachzuweisen.

In einer Ausführungsform umfasst das Sensoren-Array mehrere Gruppen von Arbeitselektroden, wobei jede Gruppe ein unterschiedliches Material aufweist, die einzelnen Arbeitselektroden einer Gruppe jedoch dasselbe Material aufweisen. In einer anderen Ausführungsform umfasst das Sensoren-Array mehrere Gruppen von Arbeitselektroden, wobei die einzelnen Arbeitselektroden einer Gruppe verschiedene Materialien aufweisen, jede Gruppe aber die jeweils gleichen Materialien aufweist.

Das Sensor-Array weist in einer Ausführungsform mindestens einen Sensor mit einer beheizten Arbeitselektrode auf, wobei es bevorzugt mehrere Sensoren mit jeweils unabhängig voneinander beheizbaren Arbeitselektroden aufweist.

Abhängig von dem Material der jeweiligen Arbeitselektrode bzw. aufgebrachten Sonden und dem spezifischen nachzuweisenden Inhaltsstoff der Flüssigkeit (dem Analyten bzw. dem Zielmolekül), kann mit einem solchen Sensor-Array mit selektiv beheizbaren Arbeitselektroden z.B. die individuell optimale Temperatur einer jeden Arbeitselektrode für eine Reaktion der spezifischen Zielmoleküle der Flüssigkeit mit bestimmten Sondenmolekülen an der Oberfläche der Arbeitselektrode bereitgestellt werden.

Das Sensoren-Array umfasst ferner bevorzugt mindestens eine unbeheizte Gegenelektrode und/oder optional mindestens eine ungeheizte Pseudoreferenzelektrode.

Ein weiterer Aspekt der vorliegenden Erfindung betrifft ein Verfahren zum Beschichten einer Arbeitselektrode, das Schritte umfasst, bei denen man einen Flüssigkeitstropfen einer Beschichtungsflüssigkeit in mindestens eine Vertiefung eines Sensors oder Sensorarrays nach einem der vorhergehenden Aspekte der Erfindung einbringt.

Dabei wird vorzugsweise ein Flüssigkeitstropfen mit einem Volumen von 5 bis 30 µL, besonders bevorzugt von 10 bis 20 µL, in eine Vertiefung eingebracht, die so gestaltet ist, dass die Oberfläche einer Arbeitselektrode mit einer Länge von vorzugsweise 3 bis 7 mm, besonders bevorzugt von 5 mm, und einen Durchmesser von 10 bis 30 µm, besonders bevorzugt von 25 µm, vollständig von dem Flüssigkeitstropfen umgeben ist. Bevorzugt ist es dabei auch, wenn der Abstand der Arbeitselektrode von dem Boden der Vertiefung an mindestens einem Punkt eine Tiefe von 0,2 mm bis 0,8 mm, vorzugsweise von 0,5 mm beträgt und sich die Vertiefung über die ganze Länge der Arbeitselektrode erstreckt.

Auf diese Weise können die Sondenmoleküle oder mikro- oder nanostrukturenbildende Inhaltstoffe oder andere Inhaltstoffe der Beschichtungsflüssigkeit, die zur Beschichtung der Arbeitselektrode vorgesehen sind, auf die gesamte Oberfläche der Arbeitselektrode gelangen und sich dort gleichmäßig anlagern. Nachdem diese Anlagerung erfolgt ist, kann der Rest der Beschichtungsflüssigkeit aus der Vertiefung entfernt werden, und die Arbeitselektrode kann zur Analyse einer Probelösung verwendet werden, wobei bestimmte Inhaltsstoffe der Flüssigkeit, sogenannte Zielmoleküle, an die Sondenmoleküle der Beschichtung der Arbeitselektrode binden können und dadurch eine messbare Strom- oder Spannungsänderung (je nach Methode: Voltammetrie, Amperometrie, Coulometrie, Potentiometrie) hervorrufen, die wiederum Rückschlüsse auf die Anwesenheit der jeweiligen Inhaltstoffe gewährt.

Sondenmoleküle sind aber nur bei immunchemischen Sensoren und Nukleinsäure, z.B. DNA-Sensoren nötig. Schwermetallionen oder kleinere organische Moleküle werden direkt an der Arbeitselektrode umgesetzt, ggf. nach vorheriger Anreicherung (Stripping-Voltammetrie, Chronopotentiometrie, Chronocoulometrie).

"Ein" bedeutet im Rahmen der Erfindung "mindestens ein", bevorzugt "genau ein". So können z.B. selbstverständlich auch mehrere Arbeitselektroden, z.B. gleichzeitig, mit dem Verfahren beschichtet werden.

Alle in der Beschreibung genannten Publikationen werden durch die Bezugnahme vollständig in die Beschreibung aufgenommen. Die vorliegende Erfindung wird im Folgenden anhand von Beispielen und Ausführungsbeispiele darstellenden Zeichnungen erläutert. Diese sollen zum Verständnis beitragen, den Schutzbereich jedoch nicht begrenzen. Die Zeichnungen zeigen in
- Fig. 1a: eine Draufsicht auf ein Ausführungsbeispiel eines erfindungsgemäßen Sensors,
- Fig. 1b: einen Schnitt entlang der Ebene A-A des Ausführungsbeispiels aus Fig. 1a,
- Fig. 2: einen Schnitt entlang der Ebene A-A des Ausführungsbeispiels aus Fig. 1a mit einem Flüssigkeitstropfen in der Vertiefung,
- Fig. 3a: eine Draufsicht auf ein Ausführungsbeispiel eines erfindungsgemäßen Sensor-Arrays mit mehreren Arbeitselektroden, einer Gegenelektrode und einer Pseudoreferenzelektrode,
- Fig. 3b: einen Schnitt entlang der Ebene A-A des Ausführungsbeispiels aus Fig. 3a und
- Fig. 4: einen Schnitt durch ein Ausführungsbeispiel eines erfindungsgemäßen Sensors mit einem Kühlkörper.

### Beispiel 1

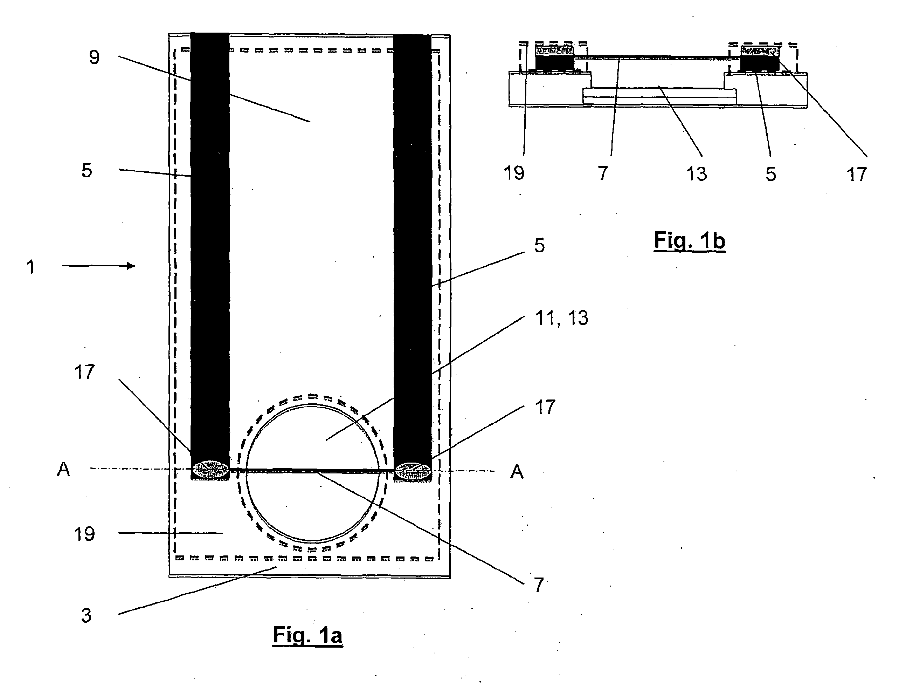

In Figur 1 ist ein Ausführungsbeispiel eines erfindungsgemäßen elektrochemischen Sensors 1 dargestellt. Der elektrochemische Sensor 1 umfasst ein Basiselement 3, ein Paar von Leitern 5, und eine drahtförmige Arbeitselektrode 7. Ferner umfasst der Sensor optional eine Gegenelektrode 8a und eine Pseudoreferenzelektrode 8b, deren genauere Gestalt für das vorliegende Ausführungsbeispiel jedoch nicht wesentlich ist.

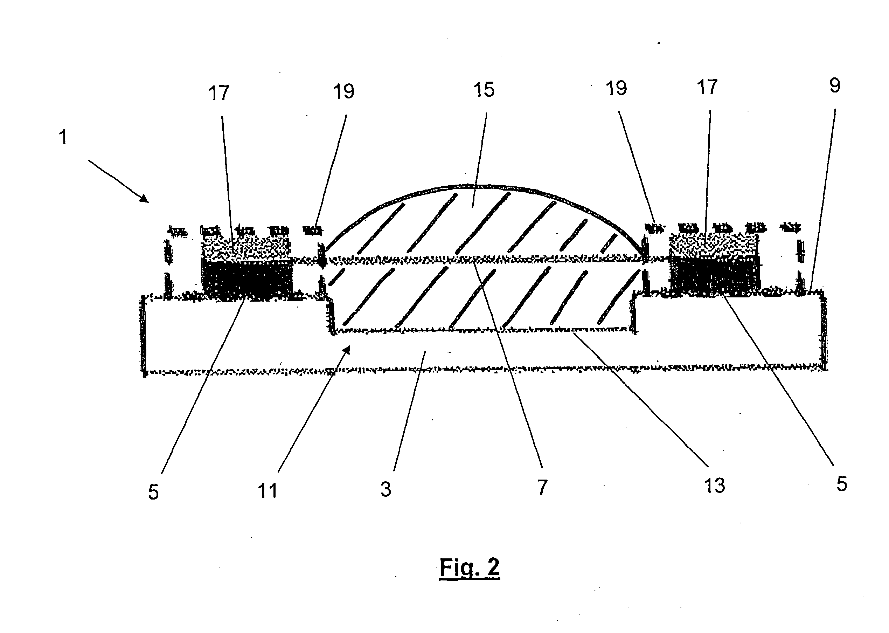

Das Basiselement 3 ist aus elektrisch isolierendem Material gefertigt und weist eine planare Oberfläche 9 auf. Die beiden Leiter 5 eines Paares sind auf der planaren Oberfläche 9 des Basiselements 3 aufgebracht und durch die drahtförmige Arbeitselektrode 7 miteinander verbunden. Unterhalb der Arbeitselektrode 7 weist das Basiselement 3 eine Vertiefung 11 in der sonst planaren Oberfläche 9 auf. Der Boden 13 dieser Vertiefung 11 ist von der Arbeitselektrode 7 beabstandet, so dass die Oberfläche der Arbeitselektrode 7 entlang ihres gesamten Umfangs zugänglich ist (siehe Fig. 2).

Die Vertiefung 11 in dem Basiselement 3 unterhalb der Arbeitselektrode 7 weist eine Form auf, die es ermöglicht, dass darin ein Flüssigkeitstropfen 15 aufgenommen werden kann, wobei die Arbeitselektrode 7 entlang ihrer gesamten Oberfläche von der Flüssigkeit des Flüssigkeitstropfens 15 umgeben und benetzt wird. Der Flüssigkeitstropfen 15 wird somit nicht mit seiner gesamten Abmessung in der Vertiefung 11 aufgenommen, sondern ragt begünstigt durch die Oberflächenspannung der Flüssigkeit über die Ebene der Oberfläche 9 des Basiselements 3 und über die Arbeitselektrode 7, welche sich im Wesentlichen in der Ebene der planaren Oberfläche 9 des Basiselements 3 erstreckt, hinaus, so dass die Arbeitselektrode 7 durch den Flüssigkeitstropfen 15 hindurch verläuft.

Der Flüssigkeitstropfen 15 weist in dem vorliegenden Ausführungsbeispiel ein Volumen von zwischen 10 und 20 µl auf und die Arbeitselektrode 7 weist eine Länge von 5 mm und einen Durchmesser von 25 µm auf. Die Vertiefung 11 hat vorliegend eine kreisförmige Gestalt (siehe Fig. 1) und der Boden 13 der Vertiefung 11 ist planar und parallel zu der planaren Oberfläche 9 des Basiselements 3 ausgestaltet. In dem beschriebenen Ausführungsbeispiel beträgt der Abstand der Arbeitselektrode 7 von dem Boden 13 der Vertiefung 11 über die gesamte Länge der Arbeitselektrode 7 0,5 mm.

Die Arbeitselektrode 7 kann vorliegend direkt beheizt werden, um eine ideale Temperatur zum Binden von Ziel-Molekülen z.B. an Sonden-Moleküle an der Oberfläche der Arbeitselektrode 7 zu gewährleisten. Unter direkt beheizt wird verstanden, dass sowohl der Heizstrom als auch der elektrochemische Elektrolysestrom, welcher das Messsignal darstellt (Voltammetrie, Amperometrie, Coulometrie) oder das Messsignal hervorruft (Chronopotentiometrie), durch die Arbeitselektrode 7 selbst fließen. Um dennoch ein ungestörtes Messsignal zu erhalten, wird eine symmetrische Brückenschaltung mit 2 Induktionsspulen, wie aus dem Stand der Technik bekannt, eingesetzt (nicht in den Figuren gezeigt). Die Arbeitselektrode 7 und/oder deren Kontakte zu den Leitern 5 sind so gestaltet, dass eine gleichmäßige Temperaturverteilung an der Oberfläche der Arbeitselektrode 7 erreicht wird.

Die Arbeitselektrode 7 ist vorliegend aus einem Draht mit einem im Wesentlichen kreisförmigen Querschnitt gebildet. Der Querschnitt kann jedoch ebenso ein anderer, z.B. rechteckiger Gestalt sein. Die Arbeitselektrode 7 weist bevorzugt ein Material aus der Reihe Gold, Silber, Kupfer, Platin, Iridium, Palladium, Bismut, Antimon oder Kohlenstoff auf, insbesondere Gold oder Platin, bevorzugt Gold. Die Arbeitselektrode 7 kann beschichtet sein. Als Beschichtungsmaterial kommen z.B. Quecksilber, Amalgam, Bismut, Silber, Gold oder eine Legierung dieser in Frage. Außerdem kann die Arbeitselektrode 7 mit Mikro- und/oder Nanostrukturen beschichtet sein. Dafür kommen vorliegend galvanische Silber- oder Goldstrukturen, Kohlenstoff, Nanoröhrchen, Fullerene oder Graphene in Betracht.

Die Arbeitselektrode 7 ist über Kontaktpunkte 17 mit den Leitern 5 verbunden. Diese Kontaktpunkte 17 weisen ein elektrisch leitendes Material auf und sind vorliegend durch Lötverbindungen realisiert. Das Basiselement 3 ist gemäß dem vorliegenden Ausführungsbeispiel als gewöhnliche einseitig bedruckte Leiterplatte gestaltet und die Leiter 5 sind wie üblich als Leiterbahnen aus Kupfer ausgeführt.

Leiter 5 und Basiselement 3 bzw. Leiterbahnen und Leiterplatte, einschließlich der Kontaktpunkte 17 der Leiter 5 mit der Arbeitselektrode 7, sind vorliegend mit einer isolierenden Schicht 19 abgedeckt, so dass nur die Arbeitselektrode 7 selbst zur Umgebung frei ist. Von den beschriebenen Bauteilen kann bei Kontakt des Basiselements 3 mit einer Flüssigkeit nur die Arbeitselektrode 7 von der Flüssigkeit benetzt werden. Dies schließt nicht aus, dass auch die Gegenelektrode 8a und ggf. die Pseudoreferenzelektrode 8b von der Flüssigkeit benetzt werden können. Die isolierende Schicht 19 ist vorliegend eine Laminierfolie, die in einem Temperaturbereich von 25°C bis 93°C, bevorzugt bis 97°C bzgl. ihrer Gestalt und Isolationseigenschaften stabil ist, kann jedoch auch durch Heißsigelkleber, Epoxidharz, Polyesterharz, Silikonkleber, Lötstopplack, Spannlack, Paraffin, Kautschuk, PVC, Duroplast, PU-Harz, PTFE, PE, PS, Polycarbonat, Glasoxiden, Nitriden oder anderen organischen oder anorganischen Polymeren, lackartigen, kristallinen oder amorphen Materialien ausgeführt sein.

### Beispiel 2

In Figur 3 ist ein Ausführungsbeispiel eines Sensor-Arrays 21 dargestellt, das einen weiteren Aspekt der vorliegenden Erfindung betrifft. Das Sensor-Array 21 weist mehrere, hintereinander angeordnete zuvor beschriebene erfindungsgemäße elektrochemische Sensoren 1 mit jeweils einem Paar von Leitern 5, die auf der planaren Oberfläche 9 eines gemeinsamen Basiselements 3 angeordnet sind und die durch eine drahtförmige Arbeitselektrode 7 miteinander verbunden sind, auf. Die einzelnen Sensoren 1 sind vorliegend parallel und eng hintereinander angeordnet, d.h. sowohl die Arbeitselektroden 7 als auch die Leiter 5 verlaufen eng aneinander angrenzend, so dass eine möglichst geringe Baugröße des Sensor-Arrays 21 erreicht wird.

Die einzelnen Vertiefungen 11 der Sensoren 1 in dem Basiselement 3 unterhalb der Arbeitselektrode 7 sind vorliegend zu einem gemeinsamen Graben 23 verbunden. Die Arbeitselektroden 7 können im Sinne dieses Ausführungsbeispiels aus demselben Material oder jeweils aus unterschiedlichen Materialien gebildet sein. Auch die Beschichtung der Arbeitselektroden 7 kann bei allen Arbeitselektroden 7 aus demselben Material oder aus jeweils unterschiedlichen Materialien realisiert sein. Die Materialien der Arbeitselektrode 7 bzw. deren Beschichtung können aus der im Zusammenhang mit dem elektrochemischen Sensor 1 genannten Reihe von Materialien ausgewählt werden. Dasselbe trifft für das Material des Basiselements 3 und der Leiter 5 zu.

Das Sensor-Array 21 ist ähnlich wie der einzelne elektrochemische Sensor 1 gemeinsam von einer isolierenden Schicht 19 abgedeckt, so dass nur die einzelnen Arbeitselektroden 7 bzw. gegebenenfalls bei einer Analyse zusätzlich eine Gegen- und wenn vorhanden eine Pseudoreferenzelektrode 8a, 8b (siehe Fig. 3) direkt mit einer das Sensor-Array 21 benetzenden Flüssigkeit in Kontakt kommen können. Die isolierende Schicht 19 kann hier ebenso wie im Falle des einzelnen Sensors 1 zum Beispiel eine Laminierfolie sein, die zwischen 25°C und 93°C stabil ist. Gegenelektrode 8a und ggf. Referenzelektrode 8b können auf dem gleichen Basiselement 3 oder davon getrennt angeordnet sein.

Alle Arbeitselektroden 7 des beschriebenen Ausführungsbeispiels des Sensor-Arrays 21 können unabhängig voneinander direkt beheizt werden, so dass die verschiedenen Sensoren 1 des Arrays 21 die Flüssigkeit bei einer individuellen, z.B. einer für eine Reaktion optimalen Temperatur kontaktieren können. Die direkte Beheizung erfolgt wie zuvor beschrieben für den einzelnen Sensor 1 mit Hilfe einer symmetrischen Brückenschaltung.

### Beispiel 3

Ein Sensorenarray 21 nach Beispiel 2, bei dem Arbeitselektroden 7 aus den Materialien Gold, Platin und Silber eingesetzt werden, wird verwendet, um in einer Probelösung gleichzeitig (a) Quecksilber am Golddraht, (b) Arsen (V) zusammen mit Arsen (III) am Golddraht, (c) Arsen (III) allein am Golddraht, (d) Cadmium am Silberdraht und (e) Phenolderivate am Platindraht bestimmen zu können. Hierbei wird ausgenutzt, dass das Sensor-Array 21 selektiv heizbar ist, so dass jede Arbeitselektrode 7 ihr eigenes zeitliches Temperaturprofil bekommt. Quecksilber und Arsen lassen sich am besten an Gold abscheiden und durch Stripping-Analyse bestimmen. Cadmium benötigt die relativ hohe Wasserstoffüberspannung am Silber. Phenolverbindungen lassen sich erst bei relativ hohen Potentialen oxidieren, außerdem ist hier gepulstes Heizen auf hohe Temperaturen zur Elektrodenreinigung nötig, wofür Platin am besten geeignet ist.

### Beispiel 4

Der Sensor nach Beispiel 1 oder das Sensorarray nach Beispiel 2 oder 3 wird mit einer Pseudoreferenzelektrode 8b dergestalt versehen, dass sich eine schmale Gold- oder Silberschicht auf dem Basiselement 3 unterhalb des Elektrodendrahtes 7 befindet (siehe Fig. 3). Auf diese Weise wird erreicht, dass sich die Pseudoreferenzelektrode 8b an der kältesten Stelle der Messzelle befindet, wo außerdem auch die Temperatur und damit das Potential der Pseudoreferenzelektrode 8b konstant bleiben. Bevorzugt ist der Abstand zwischen Arbeitselektrode 7 und Pseudoreferenzelektrode 8b größer als 200 µm, und besonders bevorzugt größer als 400 µm. So wird erreicht, dass auch durch Wärmeleitung keine störende Aufheizung der Pseudoreferenzelektrode 8b erfolgt. (vgl. Fig. 2 in J. Phys. Chem. B 2000, 104, 764-769).

Die Gegenelektrode 8a wird in diesem Beispiel durch eine zweite metallische Schicht (Pt oder Au) oder eine Kohleschicht auf dem Basiselement 3 gebildet, die parallel zu der Pseudoreferenzelektrode 8b verläuft. Platin und Gold können dabei durch Sputtern oder bedampfen aufgebracht werden.

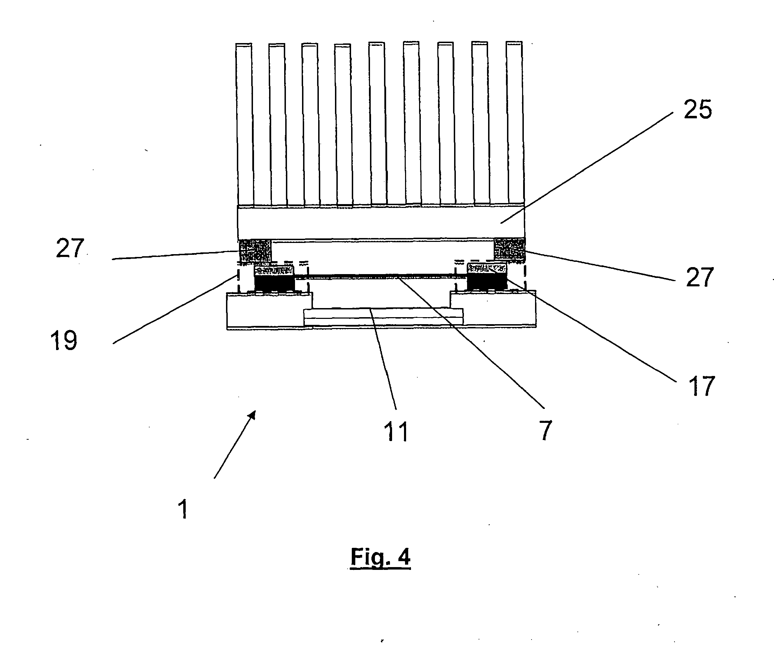

Die Gegenelektrode 8a kann auch in Gestalt der Unterseite eines metallischen Kühlkörpers 25 ausgeführt sein (siehe Fig. 4), der z.B. über eine umlaufende Dichtung 27 an der isolierenden Schicht 19 des Sensors 1 angeschlossen ist, wobei die besonderen Vorteile der Kühlwirkung und der großen Oberfläche verknüpft werden. (vgl. G.-U. Flechsig, J. Peter, DE 10 2005 007 148 B4, Ansprüche 17ff., Fig. 1).

Hierdurch wird auch die Flüssigkeitsmenge in der Vertiefung 11 vor Verdunstung geschützt und eingeschlossen.

### Beispiel 5

Anstatt einer Leiterplatte mit gedruckten Kupferleiterbahnen wird in diesem Beispiel ein Siliciumchip als Basiselement 3 verwendet. Die metallenen Leiterbahnen können entweder durch Sputtern oder Bedampfen aufgebracht werden. Alternativ werden Leiterbahnen durch n- oder p-Dotierung direkt in das Silicium-Basiselement 3 eingebracht. Die Arbeitsektroden 7 werden durch Bonden oder Löten auf den Leiterbahnen befestigt. Die Vertiefung erfolgt durch Ätzen mit HF. Isolierende Schichten 19 sind insbesondere mittels Siliciumnitriden und Siliciumoxiden zu verwirklichen.

## Patentansprüche

1. Ein elektrochemischer Sensor (1) mit
einem Basiselement (3) aus elektrisch isolierendem Material mit einer planaren Oberfläche (9), und
einem Paar von Leitern (5), die auf dieser planaren Oberfläche (9) des Basiselements (3) aufgebracht sind, wobei die beiden Leiter (5) des Paares durch mindestens eine drahtförmige Arbeitselektrode (7) verbunden sind,
wobei in dieser planaren Oberfläche (9) des Basiselements (3) unter der Arbeitselektrode (7) eine Vertiefung (11) ausgebildet ist,
wobei der Boden (13) der Vertiefung (11) von der Arbeitselektrode (7) beabstandet ist.

2. Der Sensor nach Anspruch 1, **dadurch gekennzeichnet, dass** die Vertiefung (11) so ausgestaltet ist, dass bei Einbringung eines Flüssigkeitstropfens (15) in die Vertiefung (11) die Arbeitselektrode (7) von der Flüssigkeit benetzt werden kann, wobei bevorzugt die gesamte Oberfläche der Arbeitselektrode (7) benetzt werden kann.

3. Der Sensor nach einem der vorherigen Ansprüche, **dadurch gekennzeichnet, dass** er einen Flüssigkeitstropfen (15) umfasst, welcher Kontakt zu der Arbeitselektrode (7) und zu dem Boden (13) der Vertiefung (11) aufweist.

4. Der Sensor nach einem der Ansprüche 2 oder 3, **dadurch gekennzeichnet, dass** der Flüssigkeitstropfen (15) ein Volumen von 5 bis 30 µL, vorzugsweise von 10 bis 20 µL aufweist.

5. Der Sensor nach einem der vorherigen Ansprüche, **dadurch gekennzeichnet, dass** die Arbeitselektrode (7) direkt beheizbar ist, wobei der Sensor (1) bevorzugt so ausgestaltet ist, dass die Temperaturverteilung an der Oberfläche der Arbeitselektrode (7) gleichmäßig ist.

6. Der Sensor nach einem der vorherigen Ansprüche, **dadurch gekennzeichnet, dass** die Leiter (5) und die Kontaktpunkte (17) des Leiters (5) mit der Arbeitselektrode (7) auf den nicht auf dem Basiselement (3) aufgebrachten Seiten durch eine isolierende Schicht (19) abgedeckt sind,
wobei diese Schicht (19) bevorzugt mindestens in einem Temperaturbereich von 25°C bis 93°C stabil ist, und/oder wobei diese Schicht (19) bevorzugt eine Laminierfolie ist.

7. Der Sensor nach einem der vorherigen Ansprüche, **dadurch gekennzeichnet, dass** das Basiselement (3) eine Leiterplatte ist und die Leiter (5) als Leiterbahnen ausgestaltet sind, wobei die Leiter (5) und die Kontaktpunkte (17) des Leiters (5) mit der Arbeitselektrode (7) auf den nicht auf dem Basiselement (3) aufgebrachten Seiten durch eine isolierende Laminierfolie abgedeckt sind.

8. Der Sensor nach einem der vorherigen Ansprüche, **dadurch gekennzeichnet, dass** die Arbeitselektrode (7) eine Länge von 3 bis 10 mm, vorzugsweise von 5 mm, und einen Durchmesser von 10 bis 30 µm, vorzugsweise von 25 µm, aufweist.

9. Der Sensor nach einem der vorherigen Ansprüche, **dadurch gekennzeichnet, dass** der Boden (13) der Vertiefung (11) planar und parallel zu der planaren Oberfläche (9) des Basiselements (3) ausgestaltet ist.

10. Der Sensor nach einem der vorherigen Ansprüche, **dadurch gekennzeichnet, dass** der Abstand der Arbeitselektrode (7) von dem Boden (13) der Vertiefung (11) an mindestens einem Punkt 0,2 mm bis 0,8 mm, vorzugsweise von 0,5 mm beträgt, wobei sich die Vertiefung (11) vorzugsweise über die ganze Länge der Arbeitselektrode (7) erstreckt.

11. Ein Sensoren-Array (21), welches zwei oder mehr Sensoren (1) nach einem der vorherigen Ansprüche aufweist, wobei die Sensoren (1) gemeinsam auf einem Basiselement (3) angeordnet sind.

12. Das Sensoren-Array nach Anspruch 11, **dadurch gekennzeichnet, dass** die Vertiefungen (11) unter mindestens 2 Arbeitselektroden (7) miteinander zu einem gemeinsamen Graben (23) verbunden sind und/oder dass die Vertiefungen (11) unter mindestens 2 Arbeitselektroden (7) voneinander getrennt sind.

13. Das Sensoren-Array nach einem der Ansprüche 11-12, **dadurch gekennzeichnet, dass**
die Arbeitselektroden (7) jeweils aus demselben oder aus unterschiedlichen Materialien bestehen, wobei das Material ausgewählt ist aus der Gruppe umfassend Gold, Silber, Kupfer, Platin, Iridium, Palladium, Bismut, Antimon, Quecksilber, Kohlenstoff oder Kombinationen davon.

14. Das Sensoren-Array nach einem der Ansprüche 11-13, **dadurch gekennzeichnet, dass** es mindestens einen Sensor (1) mit einer beheizten Arbeitselektrode (7) aufweist,
wobei es bevorzugt mehrere Sensoren (1) mit jeweils unabhängig voneinander beheizbaren Arbeitselektroden (7) aufweist,
wobei das Sensoren-Array (21) ferner eine unbeheizte Gegenelektrode 8a und optional eine ungeheizte Pseudoreferenzelektrode 8b umfasst.

15. Ein Verfahren zum Beschichten einer Arbeitselektrode (7), Schritte umfassend, bei denen man einen Flüssigkeitstropfen (15) einer Beschichtungsflüssigkeit in eine Vertiefung (11) eines Sensors (1) oder Sensorarrays (21) nach einem der vorhergehenden Ansprüche einbringt.

## Claims

1. An electrochemical sensor (1) having
a base element (3) made of electrically insulating material with a planar surface (9), and
a pair of conductors (5) which are superimposed on this planar surface (9) of the base element (3), wherein the two conductors (5) of the pair are connected by means of at least one wire-shaped working electrode (7),
wherein a recess (11) is formed in this planar surface (9) of the base element (3) beneath the working electrode (7),
wherein the bottom (13) of the recess (11) is at a distance from the working electrode (7).

2. The sensor as claimed in claim 1, **characterized in that** the recess (11) is designed such that, when a liquid drop (15) is introduced into the recess (11), the working electrode (7) can be wetted by the liquid, wherein preferably the whole surface of the working electrode (7) can be wetted.

3. The sensor as claimed in one of the preceding claims, **characterized in that** it incorporates a liquid drop (15) which has contact with the working electrode (7) and with the bottom (13) of the recess (11).

4. The sensor as claimed in one of claim 2 or 3, **characterized in that** the liquid drop (15) has a volume of 5 to 30 µL, preferably of 10 to 20 µL.

5. The sensor as claimed in one of the preceding claims, **characterized in that** the working electrode (7) can be directly heated, wherein the sensor (1) is preferably designed such that the temperature distribution at the surface of the working electrode (7) is uniform.

6. The sensor as claimed in one of the preceding claims, **characterized in that** the conductors (5) and the contact points (17) of the conductor (5) with the working electrode (7) are covered by an insulating layer (19) on the sides which are not superimposed on the base element (3),
wherein, preferably, this layer (19) is stable at least in a temperature range of 25° C. to 93° C., and/or wherein this layer (19) is preferably a laminating foil.

7. The sensor as claimed in one of the preceding claims, **characterized in that** the base element (3) is a printed circuit board and the conductors (5) are in the form of conductor tracks, wherein the conductors (5) and the contact points (17) of the conductor (5) with the working electrode (7) are covered by an insulating laminating foil on the sides which are not superimposed on the base element (3),

8. The sensor as claimed in one of the preceding claims, **characterized in that** the working electrode (7) has a length of 3 to 10 mm, preferably of 5 mm, and a diameter of 10 to 30 µm, preferably of 25 µm.

9. The sensor as claimed in one of the preceding claims, **characterized in that** the bottom (13) of the recess (11) is designed to be planar and parallel to the planar surface (9) of the base element (3).

10. The sensor as claimed in one of the preceding claims, **characterized in that** the distance of the working electrode (7) from the bottom (13) of the recess (11) at at least one point is 0.2 mm to 0.8 mm, preferably of 0.5 mm, and the recess (11) preferably extends over the whole length of the working electrode (7).

11. A sensor array (21) which has two or more sensors (1) as claimed in one of the preceding claims, wherein the sensors (1) are arranged together on a base element (3).

12. The sensor array as claimed in claim 11, **characterized in that** the recesses (11) beneath at least 2 working electrodes (7) are connected to one another to form a common channel (23), and/or that the recesses (11) beneath at least 2 working electrodes (7) are separate from one another.

13. The sensor array as claimed in one of claims 11-12, **characterized in that**
the working electrodes (7) are in each case made of the same or of different materials, wherein the material is selected from the group comprising gold, silver, copper, platinum, iridium, palladium, bismuth, antimony, mercury, carbon or combinations thereof.

14. The sensor array as claimed in one of claims 11-13, **characterized in that** it has at least one sensor (1) with a heated working electrode (7),
wherein it preferably has a plurality of sensors (1) with working electrodes (7) which can be heated independently of one another in each case,
wherein, further, the sensor array (21) includes an unheated counter electrode (8a) and optionally an unheated pseudo reference electrode (8b).

15. A method for coating a working electrode (7) comprising steps in which a liquid drop (15) of a coating liquid is introduced into a recess (11) of a sensor (1) or sensor array (21) as claimed in one of the preceding claims.

## Revendications

1. Capteur électrochimique (1), comprenant
un élément de base (3) en matériau électriquement isolant doté d'une surface plane (9), et
une paire de conducteurs (5) qui sont appliqués sur cette surface plane (9) de l'élément de base (3), les deux conducteurs (5) de la paire étant reliés par au moins une électrode de travail (7) en forme de fil,
un évidement (11) étant réalisé dans cette surface plane (9) de l'élément de base (3), sous l'électrode de travail (7),
le fond (13) de l'évidement (11) se trouvant à distance de l'électrode de travail (7).

2. Capteur selon la revendication 1, **caractérisé en ce que** l'évidement (11) est agencé de manière telle que lors de l'introduction d'une goutte de liquide (15) dans l'évidement (11), l'électrode de travail (7) puisse être mouillée par le liquide, sachant que de préférence toute la surface de l'électrode de travail (7) peut être mouillée.

3. Capteur selon l'une des revendications précédentes, **caractérisé en ce qu'**il comprend une goutte de liquide (15) qui est en contact avec l'électrode de travail (7) et avec le fond (13) de l'évidement (11).

4. Capteur selon l'une des revendications 2 ou 3, **caractérisé en ce que** la goutte de liquide (15) présente un volume compris entre 5 et 30 µL, de préférence entre 10 et 20 µL.

5. Capteur selon l'une des revendications précédentes, **caractérisé en ce que** l'électrode de travail (7) peut être chauffée directement, le capteur (1) étant de préférence agencé de manière telle que la distribution de températures à la surface de l'électrode de travail (7) soit uniforme.

6. Capteur selon l'une des revendications précédentes, **caractérisé en ce que** les conducteurs (5) et les points de contact (17) du conducteur (5) avec l'électrode de travail (7), sur les faces non appliquées sur l'élément de base (3), sont recouverts par une couche isolante (19),
ladite couche (19) étant stable de préférence dans au moins une plage de températures comprise entre 25 °C et 93 °C, et/ou
ladite couche (19) étant de préférence un film pour stratifiés.

7. Capteur selon l'une des revendications précédentes, **caractérisé en ce que** l'élément de base (3) est une carte de circuits imprimés et les conducteurs (5) sont réalisés comme pistes conductrices, sachant que les conducteurs (5) et les points de contact (17) du conducteur (5) avec l'électrode de travail (7), sur les faces non appliquées sur l'élément de base (3), sont recouverts par un film pour stratifiés isolant.

8. Capteur selon l'une des revendications précédentes, **caractérisé en ce que** l'électrode de travail (7) présente une longueur comprise entre 3 et 10 mm, de préférence de 5 mm, et un diamètre compris entre 10 et 30 µm, de préférence de 25 µm.

9. Capteur selon l'une des revendications précédentes, **caractérisé en ce que** le fond (13) de l'évidement (11) est réalisé de façon plane et parallèle à la surface (9) plane de l'élément de base (3).

10. Capteur selon l'une des revendications précédentes, **caractérisé en ce que** la distance de l'électrode de travail (7) par rapport au fond (13) de l'évidement (11), est comprise en au moins un point entre 0,2 mm et 0,8 mm et est de préférence de 0,5 mm, l'évidement (11) s'étendant de préférence sur toute la longueur de l'électrode de travail (7).

11. Réseau de capteurs (21) qui présente deux ou plus de deux capteurs (1) selon l'une des revendications précédentes, dans lequel les capteurs (1) sont disposés ensemble sur un élément de base (3).

12. Réseau de capteurs selon la revendication 11, **caractérisé en ce que** les évidements (11) sous au moins 2 électrodes de travail (7) sont reliés entre eux pour former un fossé (23) commun et/ou **en ce que** les évidements (11) sous au moins 2 électrodes de travail (7) sont séparés l'un de l'autre.

13. Réseau de capteurs selon l'une des revendications 11 à 12, **caractérisé en ce que** les électrodes de travail (7) sont constituées respectivement du même matériau ou de matériaux différents, le matériau étant choisi dans le groupe comprenant l'or, l'argent, le cuivre, le platine, l'iridium, le palladium, le bismuth, l'antimoine, le mercure, le carbone ou des combinaisons de ceux-ci.

14. Réseau de capteurs selon l'une des revendications 11 à 13, **caractérisé en ce qu'**il présente au moins un capteur (1) doté d'une électrode de travail (7) pouvant être chauffée,
sachant qu'il comporte de préférence plusieurs capteurs (1) avec des électrodes de travail (7) pouvant être chauffées indépendamment les unes des autres,
sachant que le réseau de capteurs (21) comprend en outre une contre-électrode 8a non chauffée et, de manière facultative, une pseudoélectrode de référence 8b.

15. Procédé de revêtement d'une électrode de travail (7), comprenant des étapes selon lesquelles on introduit une goutte de liquide (15) d'un liquide de revêtement dans un évidement (11) d'un capteur (1) ou d'un réseau de capteurs (21) selon l'une des revendications précédentes.
